# FASCICULE DE BREVET EUROPEEN

(11) **EP 2 401 241 B1**
(45) Date de publication et mention de la délivrance du brevet: **17.09.2014**
(21) Numéro de dépôt: 10705335.7
(22) Date de dépôt: 19.02.2010
(51) Int. Cl.: C04B 26/02, C04B 28/02, C04B 40/00

(54) **COMPOSITION SECHE COMPRENANT UN LIANT ET UNE HUILE DE SILICONE**
TROCKENE ZUSAMMENSETZUNG, UMFASSEND EIN BINDEMITTEL UND EIN SILIKONÖL
DRY COMPOSITION COMPRISING A BINDER AND A SILICONE OIL

(30) Priorité: 26.02.2009 FR 0900884
(43) Date de publication de la demande: 04.01.2012
(73) Titulaire: Sika Technology AG, 6340 Baar (CH)
(72) Inventeur: GUYOT, Christophe, F-76230 Bois-Guillaume (FR); GUILLOT, Laurent, F-27200 Vernon (FR)
(74) Mandataire: Sika Patent Attorneys
(86) Numéro de dépôt international: PCT/EP2010/052090
(87) Numéro de publication internationale: WO 2011/069685

(56) Documents cités:
- EP-A- 1 661 874
- WO-A-2006/084588
- FR-A- 2 789 679
- US-B1- 6 464 776

## Description

La présente invention se rapporte à une composition sèche comprenant au moins un liant et au moins une huile de silicone permettant notamment de réduire l'émission de poussière, ainsi qu'à son procédé de préparation.

La composition de la présente invention est utilisable par exemple pour la préparation de matériaux à base de ciment, tels que les mortiers, les bétons, les enduits, etc.

Dans la description ci-dessous, les références entre crochets (**[ref. x**]) renvoient à la liste des références présentée après les exemples.

### Etat de la technique

Les compositions sèches ou prêtes à l'emploi à base de ciment, pour mortiers ou enduits sont généralement sous forme de produits pulvérulents et sont connues pour présenter un taux d'émission de poussière important, par exemple lors de leur fabrication, leur conditionnement ou leur utilisation.

Cette émission de poussière pose des problèmes pour la santé des travailleurs et leurs conditions de travail.

De plus, les poussières souillent l'environnement local dans lequel les matériaux sont stockés ou manipulés (usine ou site de construction).

En outre, les particules les plus fines et qui s'envolent plus facilement peuvent être des adjuvants ou des additifs faiblement dosés. Or, ces constituants sont coûteux et jouent un rôle important dans la composition ou pour les propriétés du matériau final. L'envol de ces constituants peut modifier la constitution de la composition et entraîner une perte des performances du matériau final.

Par ailleurs, les particules fines des compositions peuvent être de nature hygroscopique et/ou électrostatique et peuvent provoquer des difficultés supplémentaires de mise en oeuvre ou d'emploi des compositions sèches, par exemple des problèmes de coulabilité, de collage, de risque d'explosions du type « coup de poussière ».

Pour réduire les émissions de poussière, des additifs « anti-poussière » ont été employés dans la formulation des compositions.
On peut citer par exemple, le brevet US 6464776 qui décrit l'utilisation de polytétrafluoroéthylène pour limiter l'émission de poussière des compositions de ciment ou mortier. Mais ces constituants favorisent la pénétration d'air dans la composition ce qui altère les caractéristiques physico-chimiques du matériau, d'où la nécessité d'ajouter des additifs agents démoussants supplémentaires.

La demande de brevet WO 2006/084588, décrit quant à elle l'utilisation de composés hydrocarbonés comme additifs pour réduire la poussière engendrée par les compositions sèches pour la construction. Cependant, parmi les additifs connus, certains sont peu efficaces et l'obtention d'un effet « anti-poussière » significatif nécessite des quantités importantes de ces additifs.

Le document FR 2 789 679 concerne des éléments de construction préfabriqués à base de plâtre durci présentant une résistance à l'eau améliorée. Ce document décrit une composition hydrofugeante comprenant, en mélange homogène, un agent d'hydrofugation, comprenant un composé siliconé et un additif minéral ayant une affinité synergique d'hydrofugation avec ce dernier, comportant par exemple un matériau argileux. Ajoutée à la matière sèche à partir de laquelle le substrat est préformé à l'état humide, cette composition permet d'augmenter l'hydrofugation du plâtre durci. La matière sèche comprend majoritairement au moins un sulfate de calcium hydratable.

L'additif minéral augmente ou potentialise le pouvoir d'hydrofugation du composé siliconé.

Le composé siliconé est un alkyhydrogénopolysiloxane, en particulier l'huile de silicone méthylhydrogénopolysiloxane commercialisée sous la marque MH15^{®}de Bayer.

Il s'agit donc d'un composé siliconé dans lequel l'atome silicone des motifs siloxane est lié à un atome d'hydrogène et un radical alkyle. Autrement dit, il s'agit d'une huile de silicone de formule II : 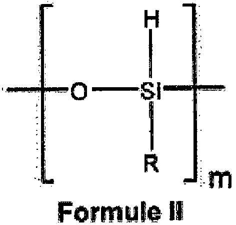 dans laquelle R est un radical alkyle.

En particulier, l'huile de silicone MH 15^{®} de Bayer, et utilisée dans le document FR 2 789 679, répond à la formule suivante : 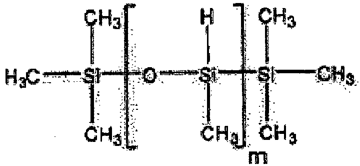 dans laquelle m est environ 40.

Ainsi, le document FR 2 789 679 ne décrit pas une huile de silicone contenant exclusivement des motifs dialkylpolysiloxane.

Par ailleurs, certains additifs sont coûteux ou nécessitent d'être préparés par des procédés contraignants ou difficiles à mettre en oeuvre.

De plus, certains additifs peuvent détériorer les propriétés et performances des mortiers ou bétons, et notamment, les caractéristiques d'ouvrabilité, de résistance, les propriétés de d'adhérence, les propriétés d'imperméabilisation, de durabilité.

En outre, habituellement, l'ajout d'additifs « anti-poussière » détériore notablement le comportement au feu des matériaux (par exemple des mortiers, bétons, enduits). En d'autres termes, plus une composition comportent d'additifs « anti-poussière », moins bonne est la résistance du matériau au feu.

Il existe donc un réel besoin palliant ces défauts et inconvénients de l'art antérieur. En particulier, il existe un réel besoin de disposer de compositions sèches pour matériaux à base de ciments permettant de limiter efficacement les émissions et l'envol de poussière lors de leur fabrication, transport ou manipulation, tout en permettant en outre aux matériaux obtenus de conserver de bonnes propriétés de résistance au feu. Notamment, il existe un réel besoin de disposer de compositions de faibles coûts, pratiques et faciles d'utilisation, présentant par exemple de bonnes propriétés de stabilité, coulabilité, etc. En outre, il existe un réel besoin de disposer de compositions sèches permettant d'obtenir des matériaux finaux présentant de bonnes caractéristiques physico-chimiques, et notamment d'ouvrabilité, de durabilité, de résistance à la compression, de résistance au feu, etc.

### Exposé de l'invention

La présente invention a précisément pour but de répondre à ces besoins et inconvénients de l'art antérieur en fournissant une composition sèche comprenant au moins un liant et au moins une huile de silicone de formule (I) suivante : 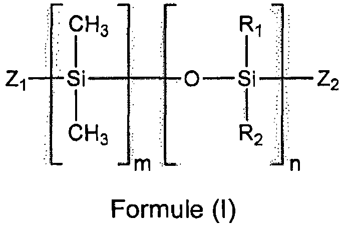 dans laquelle,
- Z₁ et Z₂, identiques ou différents, représentent indépendamment un groupement terminal choisi dans le groupe comprenant un atome d'hydrogène, un hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué ;
   R₁ et R₂, identiques ou différents, représentent indépendamment un hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué ;
- m et n, identiques ou différents, représentent indépendamment un nombre allant de 1 à 100, par exemple de 1 à 50, par exemple de 1 à 30, par exemple de 1 à 10.

Selon l'invention, dans la formule (I), Z₁ et Z₂ peuvent être identiques ou différents, chacun de Z₁ et Z₂ représentant indépendamment un groupement terminal choisi dans le groupe comprenant :
- un hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué,
- un atome d'hydrogène, un hydroxyle, un radical alkyle en C₂ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué, ou
- un hydroxyle, un radical alkyle en C₂ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué.

Selon l'invention, dans la formule (I), R₁ et R₂ peuvent être identiques ou différents, chacun de R₁ et R₂ représentant indépendamment un groupement choisi dans le groupe comprenant :
- un hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué, **ou**
- un hydroxyle, un radical alkyle en C₂ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué.

On entend par « liant » au sens de la présente invention, un matériau assurant la cohésion d'un ensemble, permettant de lier entre eux différents éléments tels que des sables, des agrégats, des granulats. Il peut par exemple s'agir de liants minéraux (par exemple des liants hydrauliques) ou de liants organiques (par exemple des liants hydrocarbonés).

On entend par « liant minéral » au sens de la présente invention, un liant composé de minéraux qui, mélangés à l'eau forment une pâte qui durcit en agglomérant les granulats. Parmi les liants minéraux, on peut citer tout liant connu de l'homme du métier, par exemple le ciment (ciment alumineux, hydraulique, magnésien, métallurgique, sursulfaté, composé, ciment de haut-fourneau, ciment de laitier, ciment aux cendres, ciment pouzzolanique, ciment Portland, ciment Portland composé, etc.), la chaux (chaux calcinée, frittée, carbonatée, fluatée, chaux grasse, chaux maigre, chaux hydraulique, chaux éteinte, etc.), le plâtre, l'argile, le métakaolin, etc.

On entend par « liant organique » au sens de la présente invention, un liant hydrocarboné, c'est-à-dire un liant à base d'hydrocarbures. Parmi les liants organiques, on peut citer tout liant connu de l'homme du métier, par exemple les polymères synthétiques.

Les polymères synthétiques peuvent par exemple se présenter sous forme de poudre sèche, non collante et/ou redispersable (appellation consacrée, "redispersible powder" en anglais). Il peut s'agir par exemple de polymères thermoplastiques, de polymères thermodurcissables, de polymères acryliques, de polymères styrène acryliques, de polymères époxydiques, de polymères polyuréthanes, de polymères à base de monomères d'éthylène, de vinylène et/ou d'acétate de vinyle, de polymères à base de monomères de styrène et/ou de butadiène.

Selon un mode de réalisation particulier de l'invention, le liant peut être choisi dans le groupe comprenant le ciment, la chaux, le plâtre, l'argile, les polymères synthétiques, par exemple tels que définis précédemment, ou un mélange de ceux-ci.

Selon un autre mode de réalisation particulier de l'invention, le liant peut être choisi dans le groupe comprenant le ciment, la chaux, les polymères synthétiques, par exemple tels que définis précédemment, ou un mélange de ceux-ci.

On entend par « radical alkyle » au sens de la présente invention, un radical carboné, qui peut être linéaire, ramifié ou cyclique, éventuellement substitué, comprenant 1 à 12 atomes de carbone, par exemple 1 à 10 atomes de carbone, par exemple 1 à 8 atomes de carbone.

On entend par « radical alcényle » au sens de la présente invention, un radical carboné présentant au moins une double liaison carbone-carbone, qui peut être linéaire, ramifié ou cyclique, éventuellement substitué, comprenant 2 à 12 atomes de carbone, par exemple 2 à 10 atomes de carbone, par exemple 2 à 8 atomes de carbone.

On entend par « radical hétéroalkyle » au sens de la présente invention, un radical alkyle tel que défini précédemment, ledit système alkyle comprenant au moins un hétéroatome, notamment choisi dans le groupe comprenant le soufre, l'oxygène, l'azote, le bore.

On entend par « radical aryle » au sens de la présente invention, un radical hydrocarboné comprenant au moins un cycle satisfaisant la règle d'aromaticité de Hückel. Ledit aryle est éventuellement substitué et peut comprendre de 6 à 18 atomes de carbone, par exemple 6 à 10 atomes de carbone.

On entend par « cycloalkyle » au sens de la présente invention, un radical carboné cyclique, saturé ou insaturé, éventuellement substitué, qui peut comprendre 5 à 10 atomes de carbone.

Le terme « substitué » désigne par exemple le remplacement d'un atome d'hydrogène dans une structure donnée par un radical choisi dans le groupe comprenant un alkyle, un alcényle, un hétéroalkyle, un aryle, hétéroaryle, un hydroxyle, un amine, un halogène, un haloalkyle, etc. Lorsque plus d'une position peut être substituée, les substituants peuvent être les mêmes ou différents à chaque position.

On entend par « haloalkyle » au sens de la présente invention, un radical alkyle tel que défini précédemment, ledit système alkyle comprenant au moins un halogène.

Selon l'invention, l'huile de silicone de formule (I) peut consister en une huile de formule (I) ou peut être sous la forme d'un mélange d'huiles de silicone de formule (I) différentes, par exemple un mélange de 2, 3, 4 ou 5 huiles de silicones de formule (I).

L'huile de silicone peut par exemple être un polymère siliconé, par exemple le polydiméthylesiloxane.

A titre indicatif, on peut citer des huiles de silicone commerciales comme par exemple les huiles Dow Corning (marque déposée), par exemple les références Dow Corning 200R Fluid 1 CST, Dow Corning 200R Fluid 5 CST, Dow Corning 200R Fluid 10 CST, Dow Corning 200R Fluid 20 CST, commercialisées par la société Dow Corning (Belgique).

Il a été observé de manière inattendue que la présence d'huile de silicone dans la composition de l'invention ne détériorait pas la résistance au feu des matériaux les comprenant.

La composition selon l'invention peut être sous forme de poudre. Les particules de poudre peuvent par exemple avoir un diamètre allant jusqu'à 10mm, par exemple de 0,001 à 10 mm, par exemple de 0,01 à 5 mm, par exemple de 0,1 à 1 mm. Par exemple, la composition selon l'invention peut comprendre des particules de poudre dont plus de 50% des particules ont un diamètre allant de 0,001 à 10 mm.

L'huile peut avoir une tension superficielle inférieure à 60 mN/m, par exemple inférieure à 45 mN/m. Selon un mode de réalisation de l'invention l'huile peut avoir une tension superficielle inférieure à 35 mN/m.

On entend par « tension superficielle » au sens de la présente invention, la tension qui existe à la surface de séparation entre l'huile et les particules de poudre (solides). La tension superficielle permet de caractériser l'aptitude de l'huile à mouiller la surface des particules de poudre. Selon l'équation d'Young-Dupré, l'huile mouille d'autant plus facilement les particules solides que la tension superficielle de l'huile est plus faible que celle des particules solides.

La tension superficielle de l'huile peut être par exemple déterminée par la méthode de la goutte pendante (**[ref. 3]** STAUFFER (C.E) - The measurement of the surface tension by the pendant drop technique. J.Phys. Chem. 69, 1965, p.1933-8).

Selon l'invention, l'huile peut avoir une viscosité dynamique inférieure à 1 Pa.s à 20°C, par exemple inférieure à 0,1 Pa.s à 20°C, par exemple de 0,001 à 0,1 Pa.s à 20°C, par exemple de 0,001 à 0,08 Pa.s à 20°C, par exemple de 0,001 à 0,05 Pa.s à 20°C.

On entend par « viscosité dynamique » selon l'invention la propriété physique de l'huile qui caractérise la contrainte engendrée par un effort de cisaillement dans l'huile.

La viscosité dynamique de l'huile peut être par exemple déterminée par la méthode de la norme NF EN ISO 2555 ou ISO 3104.

Selon un mode de réalisation de l'invention, l'huile peut présenter une tension superficielle inférieure à 45 mN/m et une viscosité dynamique inférieure à 0,1 Pa.s à 20°C.

La poussière dont on cherche à limiter voire réduire l'émission, est constituée par de fines particules (légères) contenues dans la composition sèche. Il a été observé de façon tout à fait surprenante qu'un choix adapté de la tension superficielle et de la viscosité de l'huile permettait d'améliorer l'effet anti-poussière de la composition de l'invention. En effet, un choix adapté de ces paramètres permet de réduire l'émission et l'envol des fines particules sous forme de poussière tout en évitant la formation d'agglomérats non souhaités (par exemple agglomération avec de grosses particules pouvant détériorer la mise en oeuvre de la composition sèche de l'invention et ses performances (par exemple ses propriétés de coulabilité, de collage) et/ou les performances des mortiers ou matériaux obtenus à partir de la composition sèche de l'invention (ouvrabilité, résistance mécanique, adhérence). On entend par « fines particules » selon l'invention des particules ayant un diamètre inférieur à 50 µm, par exemple inférieur à 32 µm. On entend par « grosses particules » selon l'invention les particules ayant un diamètre supérieur à 50 µm.

Selon un mode particulier de réalisation de l'invention, la teneur en huile de silicone dans la composition peut être de 0,05 à 5% en poids de la composition, par exemple de 0,1 à 5%, par exemple de 0,1 à 1%, par exemple de 0,2 à 1%.

La composition de l'invention peut avoir une teneur en liant(s) de 5 à 95% en poids de la composition, par exemple de 10 à 80%, par exemple de 15 à 50%.

Selon l'invention, la composition peut comprendre en outre au moins un granulat choisi dans le groupe comprenant le sable, la poudre de pierre, la brique pilée, le gravier, les gravillons, l'alumine, la bauxite, la bauxite calcinée, le silex concassé, ou tout granulat naturel ou synthétique (par exemple bois, caoutchouc, polystyrène). L'homme du métier sera à même de choisir le granulat à utiliser selon l'application ciblée.

Par exemple, la composition peut avoir une teneur en granulat(s) de-5 à 95% en poids de la composition, par exemple de 20 à 90%, par exemple de 50 à 85%.

On entend par « granulat » au sens de la présente invention une particule solide ou un agrégat de particules solides d'origine naturelle ou synthétique, destiné à entrer dans la composition de matériaux destinés à la construction, le bâtiment, la fabrication d'ouvrages de travaux publics. Le granulat peut avoir un diamètre allant de 1 µm à 10 mm, par exemple de 100 µm à 10 mm. Parmi les granulats utilisables, on peut citer par exemple les cailloux, le gravier (présentant une taille des particules de 2 à 10 mm), le sable grossier (présentant une taille de particules de 0,5 à 2 mm), le sable fin (présentant une taille de particules de 100 à 500 µm), le limon, les fines (également appelées fines d'addition ou « filler » en anglais), etc.

On entend par « fine » (ou « filler ») au sens de la présente invention un granulat fin, présentant par exemple une taille de particule inférieure à 125 µm.

Selon un mode de réalisation particulier de l'invention, le granulat peut être un granulat siliceux, calcaire, silico-calcaire, alumineux ou silico-alumineux.

Selon l'invention, la composition peut comprendre en outre un additif choisi dans le groupe comprenant des cendres volantes, un agent hydrofuge ou imperméabilisant, un sel d'acide carboxylique, une résine, un adjuvant retardateur, un adjuvant accélérateur, un agent entraîneur d'air, un agent démoussant, un agent modificateur de rhéologie, et tout autre adjuvant ou additif utilisable connu de l'homme du métier. L'homme du métier sera à même de choisir l'additif selon l'application ciblée. Ces additifs peuvent être avantageusement sous forme de poudre ou sous une forme compatible avec leur introduction dans une composition sèche selon l'invention.

On entend par « additif » au sens de la présente invention un constituant ou produit ajouté à une composition et permettant de procurer à ladite composition des caractéristiques et propriétés particulières, par exemple permettant de modifier les temps de prise du matériau, la conservation, de modifier la viscosité, l'ouvrabilité, d'améliorer les résistances mécaniques, l'imperméabilité, d'empêcher la croissance de microorganismes.

Parmi les agents entraîneur d'air et les agents démoussants, on peut citer par exemple un détergent, un agent mouillant, un agent dispersant, un émulsifiant. Plus précisément, il peut s'agir de tensioactifs anioniques, de tensioactifs cationiques, de tensioactifs zwitterioniques ou amphotères, de tensioactifs non ioniques (par exemple un ester de saccharose, du sorbitol, un ester de polyéthylène glycol, un ester d'acide gras, un éthoxylate ou tout autre tensioactif non ionique décrit par exemple dans la demande de brevet EP 1 661 874).

Parmi les agents hydrofuges ou imperméabilisants, on peut citer par exemple un ester d'acide gras, un dérivé silicone, un dérivé du PTFE (polytétrafluoréthylène).

Parmi les sels d'acide carboxylique, on peut citer par exemple un carboxylate de calcium, par exemple le formiate de calcium.

Parmi les résines, on peut citer par exemple une résine aminée dérivée de l'urée (par exemple la mélamine).

Parmi les adjuvants retardateurs (composé ayant un effet retardant sur la prise des ciments, mortiers ou autres matériaux), on peut citer par exemple les gluconates, l'acide citrique, l'acide tartrique, leurs sels, les résines aminoplastes ou autres adjuvants retardateurs décrits par exemple dans la demande de brevet EP 1 661 874.

Parmi les agents accélérateurs, on peut citer par exemple les sels de formiate, thiocyanate, nitrate, NaCl, CaCl₂, l'hydroxyde d'aluminium, l'alumine, la tri-éthanol amine, la tri-isopropanol amine.

Parmi les modificateurs de rhéologie, on peut citer par exemple les éthers de cellulose, les gommes (par exemple xanthane, guar, gélane, etc.), les amidons, les éthers d'amidon, l'alcool polyvinylique, les poly-acrylates hydro-solubles, la silice colloïdale, les polymères ou copolymères (un copolymère acétate-versatate, un copolymère styrène acrylique, un polymère acétate de polyvinyle, un co-polymère acrylique, un terpolymère éthylène-vinylène-acétate), mais aussi les fluidifiants comme la mélamine et ses dérivés, le poly-naphtalène et ses dérivés, les poly-carboxylates, la caséine.

La teneur totale en additif(s) dans la composition peut être de 0,01 à 20% en poids total de la composition, par exemple de 0,05 à 15%, par exemple de 0,1 à 10%.

Selon un mode particulier de réalisation de l'invention, la composition peut comprendre :
- au moins une huile de formule (I) avec une teneur totale en huile de 0,05 à 5% en poids de la composition,
- au moins un liant avec une teneur totale en liant de 5 à 95% en poids de la composition,
- au moins un granulat avec une teneur totale en granulat de 5 à 95% en poids de la composition, et
- au moins un additif avec une teneur totale en additif de 0,01 à 20% en poids de la composition.

La présente invention concerne également un procédé de préparation d'une composition selon l'invention dans lequel :
(i) on prépare un mélange comprenant au moins un liant et éventuellement au moins un granulat et/ou au moins un additif,
(ii) on ajoute au mélange obtenu en (i) au moins une huile de formule (I).

La présente invention concerne également un procédé de préparation d'une composition selon l'invention dans lequel on prépare un mélange comprenant au moins une huile de formule (I), au moins un liant, et éventuellement au moins un granulat et/ou au moins un additif.

La présente invention concerne également un procédé de préparation d'une composition selon l'invention dans lequel :
(i) on prépare un mélange comprenant au moins une huile de formule (I) et au moins un liant et éventuellement au moins un granulat et/ou au moins un additif
(ii) on prépare un mélange comprenant au moins un liant et/ou au moins un granulat et/ou au moins un additif
(iii) on ajoute le mélange obtenu en (i) au mélange obtenu en (ii).

La présente invention concerne également l'utilisation d'une composition selon l'invention notamment pour la préparation d'un coulis de ciment, d'un mortier, d'un béton, d'un enduit, d'un crépit et/ou d'une chape. La présente invention concerne également l'utilisation d'une composition selon l'invention notamment pour la construction, le bâtiment, la réparation des bétons, la protection des bétons et aciers contre les intempéries, les agressions extérieures ou le feu, l'imperméabilisation, l'ancrage, le callage, le scellement, le collage de tuiles ou carrelages, le revêtement de façade.

Une composition sèche comprenant au moins un liant et au moins une huile de silicone de formule (I) suivante : 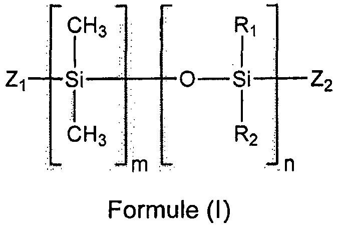 dans laquelle,
- Z₁ et Z₂, identiques ou différents, représentent indépendamment un groupement terminal choisi dans le groupe comprenant un atome d'hydrogène, un hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué ;
- R₁ et R₂, identiques ou différents, représentent indépendamment un hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué ;
- m et n, identiques ou différents, représentent indépendamment un nombre allant de 1 à 100,
est décrite.

Un procédé de préparation d'une composition selon l'invention dans lequel :
(i) on prépare un mélange comprenant au moins un liant et/ou au moins un granulat et/ou au moins un additif,
(ii) on ajoute au mélange obtenu en (i) au moins une huile de formule (I),
est décrit.

Un procédé de préparation d'une composition selon l'invention dans lequel :
(i) on prépare un mélange comprenant au moins une huile de formule (I) et au moins un liant et/ou au moins un granulat et/ou au moins un additif
(ii) on prépare un mélange comprenant au moins un liant et/ou au moins un granulat et/ou au moins un additif
(iii) on ajoute le mélange obtenu en (i) au mélange obtenu en (ii) est également décrit.

D'autres avantages pourront encore apparaître à l'homme du métier à la lecture des exemples ci-dessous, illustrés par les figures annexées, donnés à titre illustratif.

### Brève description des figures

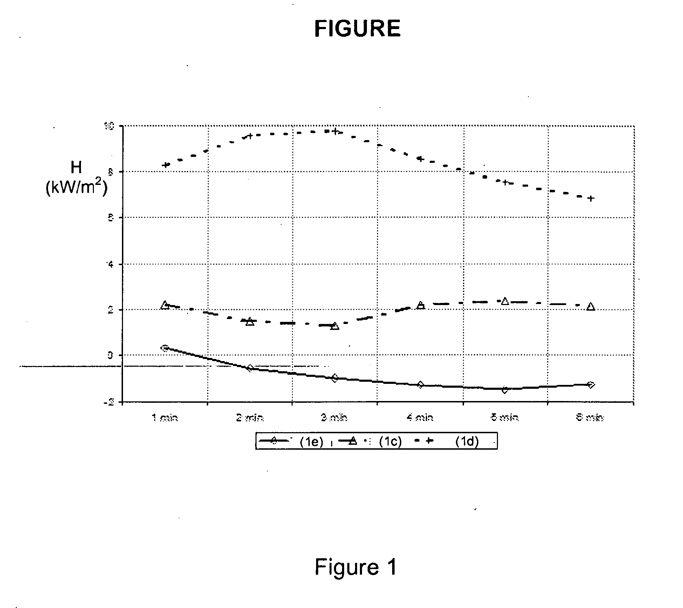

- La figure 1 représente les courbes de dégagement de chaleur en fonction du temps. En ordonnées, « H » est exprimé en kW/m². En abscisse, le temps est exprimé en minute (min).

### EXEMPLES

Dans les exemples qui suivent, l'agent « anti-poussière » désigne l'huile de formule (I).

### Exemple 1 : Compositions (1a), (1b) et (1c) selon l'invention

Les compositions (1a), (1b) et (1c) selon l'invention sont des compositions sèches pour mortier dont les teneurs en constituants sont données dans le tableau 1 ci-dessous (en % en poids total de la composition sèche):

**Tableau 1 : Exemple de composition selon l'invention**

| | |
|---|---|
| Ciment (Ciment CEM I 52.5R CE commercialisé par la société Calcia, France) | 24,8% |
| Sable siliceux (Sable SB commercialisé par la société Fulchiron, France) | 74,5% |
| Agent « anti-poussière » | 0,7% |

Les trois compositions (1a), (1b) et (1c) ont été réalisées avec les proportions données ci-dessus, et avec pour agent « anti-poussière » les huiles de silicone suivantes :
- composition (1 a) comprenant 0,7% d'huile de silicone PDMS (polydiméthylsiloxane) Dow Corning 200 R 5 CST commercialisée par la société Dow Corning (Belgique).
- composition (1 b) comprenant 0,7% d'huile de silicone PDMS Dow Corning 200 R 10 CST commercialisée par la société Dow Corning (Belgique).
- composition (1c) comprenant 0,7% d'huile de silicone Dow Corning 200 R 20 CST commercialisée par la société Dow Corning (Belgique).

Les caractéristiques des huiles de silicone, utilisées comme agent « anti-poussière » dans les compositions (1a), (1b) et (1c) selon l'invention, sont données dans le tableau 2 ci-dessous :

**Tableau 2 : Caractéristiques des huiles de silicone dans des compositions selon l'invention**

| | Dow Corning 200 R 5 CST | Dow Corning 200 R 10 CST | Dow Corning 200 R 20 CST |
|---|---|---|---|
| viscosité à 20°C (en Pa.s) | 0,007 | 0,013 | 0,025 |
| tension superficielle (en mN/m) | 18 | 19 | 19 |

### Mode opératoire :

Les compositions (1 a), (1 b) et (1 c) ont été préparées comme suit :
(i) on mélange le sable, le filler, le ciment, et les adjuvants
(ii) on ajoute l'agent anti-poussière au mélange précédent et on mélange le tout.

### Exemple 2 : Mesure de l'effet « anti-poussière » des compositions de l'invention et exemples comparatifs

Quatre compositions (1 a), (1b), (1c) et (1d) ont été réalisées avec divers agent « anti-poussière » ainsi qu'une composition (1e), ou composition « témoin », ne comprenant pas d'agent « anti-poussière », comme décrit ci-dessous :
- composition (1 a) selon l'invention comprenant 0,7% d'huile de silicone PDMS Dow Corning 200 R 5 CST
- composition (1 b) selon l'invention comprenant 0,7% d'huile de silicone PDMS Dow Corning 200 R 10 CST
- composition (1c) selon l'invention comprenant 0,7% d'huile de silicone PDMS Dow Corning 200 R 20 CST
- composition (1d) (préparée selon le mode opératoire de l'exemple 1) comprenant 0,7% d'huile minérale (huile paraffinique commercialisée sous la référence Shell Catenex H713 par la société SHELL France)
- composition (1 e) (préparée selon le mode opératoire de l'exemple 1) ne comprenant pas d'agent « anti-poussière ».

Le test réalisé pour mesurer l'émission de poussière d'un mortier consiste à remplir un flacon d'une contenance de 100 ml avec 65 g de mortier sec et de secouer manuellement 10 fois le flacon fermé. Une fois l'agitation stoppée, le flacon est rapidement ouvert. L'émission de poussière est alors évaluée au travers de la poussière qui se dégage de l'ouverture du flacon. L'émission de poussière est classée sur une échelle variant de 1 à 4 (1 correspondant à une très faible d'émission de poussière, 4 correspondant à une très forte émission de poussière).

Les résultats obtenus sont répertoriés dans le tableau 3 suivant :

**Tableau 3 : Comparaison de l'émission de poussière**

| Composition | (1a) (DC 5) | (1b) (DC 10) | (1c) (DC 20) | (1d) (huile minérale) | (1e) (témoin) |
|---|---|---|---|---|---|
| Emission de poussière | 1 | 1 | 1 | 1 | 4 |

Les résultats montrent que les compositions (1a), (1b) et (1c) selon l'invention comprenant une huile de silicone permettent d'obtenir une réduction importante de l'émission de poussière par rapport à la composition témoin.

Il a été observé que la réduction de l'émission de poussière pour les compositions (1a), (1b) et (1c) selon l'invention, est comparable à celle de la composition (1d) qui comprend une huile minérale comme agent « anti-poussière ».

### Exemple 3 : Evaluation des performances des mortiers issus des compositions de l'invention

Pour ces essais, les cinq compositions préparées selon l'exemple 3.a) ont été évaluées et comparées.

Ces essais de performance ont été réalisés sur les mortiers durcis préparés à partir des compositions sèches de mortier (1 a), (1 b), (1 c) et (1 d) auxquelles de l'eau a été ajoutée à hauteur de 12,5% en poids total de poudre sèche. Les échantillons de mortiers ont été évalués après 28 jours de durcissement.

Les tests suivants ont été réalisés :
- Test de résistance en compression (mesure effectuée selon la norme d'essai EN 12190).
- Test de résistance en flexion (mesure effectuée selon la norme d'essai EN 12190).
- Test d'adhérence (mesure effectuée selon la norme d'essai EN 1542).
- Test de rétractation (mesure effectuée selon la norme d'essai EN 12617-4).

Les résultats de ces tests sont répertoriés dans le tableau 4 suivant :

**Tableau 4 : Comparaison des performances de mortiers**

| Composition | (1a) (DC 5) | (1b) (DC 10) | (1c) (DC 20) | (1d) (huile minérale) | (1e) (témoin) |
|---|---|---|---|---|---|
| Résistance en compression à 28 jours (MPa) | 40 | 41 | 41 | 45 | 49 |
| Résistance en flexion à 28 jours (MPa) | 7,5 | 7,5 | 8,1 | 8,1 | 8 |
| Adhérence à 28 jours (MPa) | 1,1 | 1,05 | 1,1 | 1,05 | 1,0 |
| Retrait libre à 28 jours (µm/m) | -1100 | -1160 | -1150 | - 1200 | -1450 |

Ces résultats montrent que les mortiers obtenus avec les compositions de l'invention (compositions (1 a), (1b) et (1 c)) ont des performances très bonnes. En particulier les propriétés de résistance en compression, ainsi que les propriétés d'adhérence et de retrait libre ne sont pas dégradées par rapport mortier issu de la composition témoin (1e) et sont comparables à celles de la composition (1d). Il a été observé de manière surprenante que les propriétés de retrait libre des compositions selon l'invention sont améliorées par rapport à la composition témoin (1e) et à la composition (1d) comprenant l'huile minérale.

Ainsi, tout en permettant une réduction significative de l'émission de poussière, les compositions selon l'invention comprenant l'huile de silicone permettent de conserver de très bonnes performances, comparables à la composition témoin (ne comprenant pas d'additif « anti-poussière »), mais présentent également l'avantage de conserver de très bonnes propriétés de résistance au feu (comme décrit dans l'exemple 4 ci-dessous).

### Exemple 4 : Evaluation des propriétés anti-feu des mortiers issus des compositions de l'invention

Pour ces essais, les caractéristiques de résistance au feu des cinq compositions préparées dans l'exemple 2 ont été évaluées et comparées. Ces essais de résistance au feu ont été réalisés sur les mortiers durcis préparés à partir des compositions sèches de mortier (1 a), (1 b), (1 c) et (1 d) à laquelle de l'eau a été ajoutée à hauteur de 12,5% en poids total de poudre sèche. Les échantillons de mortier ont été évalués après 28 jours de durcissement.

Les essais de résistance au feu menés sont réalisés selon la norme ISO 5660-1. Ils sont conduits avec un cône calorimètre avec une puissance de 75 kW/m² (correspondant à une température de l'ordre de 880°C).
Les échantillons de mortiers obtenus après durcissement des compositions (1 a), (1 b), (1 c) et (1 d) ont été concassés (en particules de 1 mm à 3 mm de diamètre) avant d'être testés.

Différents paramètres sont mesurés pendant le test qui dure 460 sec (exposition de l'échantillon pendant ces 460 secondes à une source de chaleur dégageant 75 kW/m²):
- Durée de flamme (ou « Flame duration » en anglais) (en s) : durée de la présence de flammes en surface de l'échantillon lors du test
- Chaleur instantanée Max (ou « Peak Heat Release » en anglais) (kW/m²) : Valeur maximale de chaleur dégagée lors du test
- Chaleur dégagée (ou « Total Heat Release » en anglais) (MJ/m²) : somme de l'énergie dégagée durant toute la durée du test
- « MARHE » (« Maximum Average Rate of Heat Emission » en anglais) (kW/m²) : valeur maximum du flux de chaleur émise.

Les résultats obtenus sont répertoriés dans le tableau 5 suivant :

**Tableau 5 : Comparaison du comportement au feu**

| Composition | (1c) (DC 20) | (1d) (huile minérale) | (1e) (témoin) |
|---|---|---|---|
| Durée de flamme (en s) | 0 | 220 | 0 |
| Chaleur instantanée Max (kW/m²) | 9,0 | 14,8 | 2,5 |
| Chaleur dégagée (MJ/m²) | 0,9 | 2,7 | 0,1 |
| « MARHE » (kW/m²) | 4,0 | 9,5 | 1,1 |

Ces résultats montrent que la composition (1c) selon l'invention (comprenant l'huile de silicone PDMS) permet d'améliorer significativement la résistance au feu du mortier par rapport à la composition (1d) comprenant l'huile minérale. Notamment, il n'y a pas de persistance de flamme (durée de persistance de la flamme nulle). Par ailleurs, la chaleur dégagée, selon les 3 paramètres mesurés, est plus faible que dans le cas de la composition (1d).

Ainsi, tout en permettant une réduction de l'émission de poussière, les compositions selon l'invention comprenant l'huile de silicone permettent de conserver de très bonnes propriétés de résistance au feu, comparables à des compositions ne comprenant pas d'additif « anti-poussière » (composition témoin (1e)).

Lors des essais au cône calorimétrique, la quantité de chaleur dégagée au cours du temps par l'échantillon de mortier exposé à la source de chaleur (75 kW/m²) a également été mesurée. Les résultats obtenus sont répertoriés dans la courbe donnée en figure 1, et représentant l'évolution de la quantité de chaleur dégagée (H en kW/m²) en fonction du temps (en minutes).

Dans le cas de la composition comprenant l'huile de silicone, la courbe est nettement inférieure à celle de la composition contenant l'huile minérale. De plus, elle reste relativement proche de la courbe représentant la composition « témoin » (composition (1 e)).

Là encore, ces résultats montrent que l'ajout d'huile de silicone PDMS permet à la fois d'améliorer la résistance au feu du mortier (résistance au feu comparable à celle du témoin) et de réduire l'émission de poussière (réduction comparable à celle obtenue avec une huile minérale).

### Exemple 5 : Mesure de l'effet « anti-poussière ».

Les compositions suivantes ont été préparées :
- composition (1 a) selon l'invention comprenant 0,7% d'huile de silicone PDMS Dow Corning 200 R 5 CST, préparée selon le mode opératoire de l'exemple 1.
- composition témoin (1 e) ne comprenant pas d'agent « anti-poussière » (selon le mode opératoire de l'exemple 1).
- composition (1f) préparée par tamisage de la composition témoin (1e) éliminant les particules de diamètre inférieur à 32 µm.

L'émission de poussière de chacune de ces trois compositions a été mesurée selon le test décrit dans l'exemple 2. Les résultats obtenus sont répertoriés dans le tableau 6 suivant :

**Tableau 6 : Caractéristiques de l'effet « anti-poussière »**

| Composition | (1a) (DC 5) | (1e) (témoin) | (1f) (témoin tamisé à 32 µm) |
|---|---|---|---|
| Emission de poussière | 1 | 4 | 1 |

Comme déjà observé dans l'exemple 2, la composition (1a) selon l'invention permet une réduction importante de l'émission de poussière comparée à la composition témoin (1 e) ne comportant pas d'agent « anti-poussière ».

Par ailleurs, ces résultats montrent que la composition (1a) selon l'invention présente une réduction de l'émission de poussière comparable à celle de la composition (1f) de laquelle les particules de diamètre inférieur à 32 µm ont été éliminées par tamisage.

### Listes des références

**[ref. 1]** US 6464776.
**[ref. 2]** WO 2006/084588.
**[ref. 3]** STAUFFER (C.E) - The measurement of the surface tension by the pendant drop technique. J.Phys. Chem. 69, 1965, p.1933-8.
**[ref. 4]** EP 1661874.

## Revendications

1. Composition sèche comprenant au moins un liant et au moins une huile de silicone de formule (I) suivante : 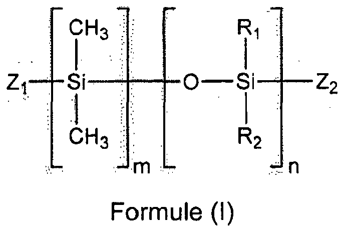 dans laquelle,
• Z₁ et Z₂, identiques ou différents, représentent indépendamment un groupement terminal choisi dans le groupe comprenant un atome d'hydrogène, un hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué ;
• R₁ et R₂, identiques ou différents, représentent indépendamment un hydroxyle, un radical alkyle en C₁ à C₁₂, linéaire ou ramifié, éventuellement substitué, un radical alcényle en C₂ à C₁₂, linéaire ou ramifié, éventuellement substitué, un radical hétéroalkyle en C₁ à C₁₂, linéaire ou ramifié, éventuellement substitué, un radical cycloalkyle en C₅ à C₁₀ éventuellement substitué, et un radical aryle en C₆ à C₁₈ éventuellement substitué ;
• m et n, identiques ou différents, représentent indépendamment un nombre allant de 1 à 100.

2. Composition selon la revendication 1, ladite composition étant sous forme de poudre.

3. Composition selon la revendication 1 ou 2 dans laquelle l'huile a une tension superficielle inférieure à 60 mN/m.

4. Composition l'une quelconque des revendications 1 à 3 dans laquelle l'huile de silicone a une viscosité dynamique inférieure à 0,1 Pa.s à 20°C.

5. Composition selon l'une quelconque des revendications 1 à 4 dans laquelle la teneur en huile de silicone est de 0,05 à 5% en poids de la composition.

6. Composition selon l'une quelconque des revendications 1 à 5 dans laquelle le liant est choisi dans le groupe comprenant le ciment, la chaux, le plâtre, l'argile, les polymères synthétiques ou un mélange de ceux-ci.

7. Composition selon l'une quelconque des revendications 1 à 5 dans laquelle le liant est choisi dans le groupe comprenant le ciment, la chaux, les polymères synthétiques ou un mélange de ceux-ci.

8. Composition selon l'une quelconque des revendications 1 à 7 dans laquelle la teneur en liant est de 5 à 95% en poids de la composition.

9. Composition selon l'une quelconque des revendications 1 à 8 comprenant en outre au moins un granulat choisi dans le groupe comprenant le sable, la poudre de pierre, la brique pilée, le gravier, les gravillons, l'alumine, la bauxite, la bauxite calcinée, le silex concassé, ou tout granulat naturel ou synthétique.

10. Composition selon la revendication 9 dans laquelle la teneur en granulat est de 5 à 95% en poids de la composition.

11. Composition selon la revendication 9 ou 10 dans laquelle le granulat est un granulat siliceux, calcaire, silico-calcaire, alumineux ou silico-alumineux.

12. Composition selon l'une quelconque des revendications 1 à 11 comprenant en outre un additif choisi dans le groupe comprenant des cendres volantes, un agent hydrofuge ou imperméabilisant, un sel d'acide carboxylique, une résine, un adjuvant retardateur, un adjuvant accélérateur, un agent entraîneur d'air, un agent démoussant, un agent modificateur de rhéologie.

13. Procédé de préparation d'une composition selon l'une quelconque des revendications 1 à 12 dans lequel on prépare un mélange comprenant au moins une huile de formule (I), au moins un liant et éventuellement au moins un granulat et/ou au moins un additif.

14. Procédé de préparation d'une composition selon la revendication 13 dans lequel :
(i) on prépare un mélange comprenant l'au moins un liant et éventuellement l'au moins un granulat et/ou l'au moins un additif,
(ii) on ajoute au mélange obtenu en (i) l'au moins une huile de formule (I).

15. Procédé de préparation d'une composition selon la revendication 13 dans lequel :
(i) on prépare un mélange comprenant l'au moins une huile de formule (I) et l'au moins un liant et éventuellement l'au moins un granulat et/ou l'au moins un additif
(ii) on prépare un mélange comprenant au moins un liant et/ou au moins un granulat et/ou au moins un additif
(iii) on ajoute le mélange obtenu en (i) au mélange obtenu en (ii).

16. Utilisation d'une composition selon l'une quelconque des revendications 1 à 12 pour la préparation d'un coulis de ciment, d'un mortier, d'un béton, d'un enduit, d'un crépit et/ou d'une chape.

17. Utilisation d'une composition selon la revendication 16 pour la construction, le bâtiment, la réparation des bétons, la protection des bétons et aciers contre les intempéries, les agressions extérieures ou le feu, l'imperméabilisation, l'ancrage, le callage, le scellement, le collage de tuiles ou carrelages, et le revêtement de façade.

## Patentansprüche

1. Trockene Zusammensetzung, umfassend wenigstens ein Bindemittel und wenigstens ein Silikonöl mit der folgenden Formel (I): 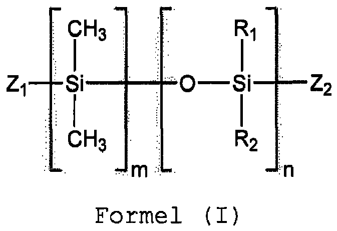 wobei:
- Z₁ und Z₂, identisch oder unterschiedlich, unabhängig eine Terminusgruppe darstellen, ausgewählt aus der Gruppe, umfassend ein Wasserstoffatom, ein Hydroxyl, ein C₁- bis C₁₂-Alkyl, linear oder verzweigt, wahlweise substituiert, ein C₂- bis C₁₂-Alkenylradikal, linear oder verzweigt, wahlweise substituiert, ein C₁-bis C₁₂-Heteroalkyl, linear oder verzweigt, wahlweise substituiert, ein C₅- bis C₁₀-Cycloalkylradikal, wahlweise substituiert, und ein C₆- bis C₁₈-Arylradikal, wahlweise substituiert;
- R₁ und R₂, identisch oder unterschiedlich, unabhängig ein Hydroxyl, ein C₁- bis C₁₂-Alkyl, linear oder verzweigt, wahlweise substituiert, ein C₂- bis C₁₂-Alkenylradikal, linear oder verzweigt, wahlweise substituiert, ein C₁- bis C₁₂-Heteroalkyl, linear oder verzweigt, wahlweise substituiert, ein C₅- bis C₁₀-Cycloalkylradikal, wahlweise substituiert, und ein C₆-bis C₁₈-Arylradikal, wahlweise substituiert, darstellen;
- m und n, identisch oder unterschiedlich, unabhängig eine Zahl von 1 bis 100 darstellen.

2. Zusammensetzung nach Anspruch 1, wobei die Zusammensetzung die Form eines Pulvers aufweist.

3. Zusammensetzung nach Anspruch 1 oder 2, wobei das Öl eine Oberflächenspannung von unter 60 mN/m aufweist.

4. Zusammensetzung nach einem der Ansprüche 1 bis 3, wobei das Silikonöl eine dynamische Viskosität von weniger als 0,1 Pa.s bei 20°C aufweist.

5. Zusammensetzung nach einem der Ansprüche 1 bis 4, wobei der Silikonölgehalt 0,05 bis 5 % nach Gewicht der Zusammensetzung beträgt.

6. Zusammensetzung nach einem der Ansprüche 1 bis 5, wobei das Bindemittel ausgewählt ist aus der Gruppe umfassend Zement, Kalk, Gips, Ton, synthetische Polymere oder ein Gemisch derselben.

7. Zusammensetzung nach einem der Ansprüche 1 bis 5, wobei das Bindemittel ausgewählt ist aus der Gruppe umfassend Zement, Kalk, synthetische Polymere oder ein Gemisch derselben.

8. Zusammensetzung nach einem der Ansprüche 1 bis 7, wobei der Bindemittelgehalt 5 bis 95 % nach Gewicht der Zusammensetzung beträgt.

9. Zusammensetzung nach einem der Ansprüche 1 bis 8, die außerdem wenigstens ein granuläres Material aufweist, ausgewählt aus der Gruppe umfassend Sand, Steinstaub, gemahlener Ziegel, Kies, Splitt, Tonerde, Bauxit, calciniertes Bauxit, zerstoßener Flint oder ein beliebiges natürliches oder synthetisches granuläres Material.

10. Zusammensetzung nach Anspruch 9, wobei der Gehalt an granulärem Material 5 bis 95 % nach Gewicht der Zusammensetzung beträgt.

11. Zusammensetzung nach Anspruch 9 oder 10, wobei das granuläre Material silikatisches, Kalkstein-, silikatisches Kalkstein-, tonerdehaltiges oder silikatisches tonerdehaltiges granuläres Material ist.

12. Zusammensetzung nach einem der Ansprüche 1 bis 11, außerdem umfassend einen Zusatzstoff, ausgewählt aus der Gruppe umfassend Flugasche, ein wasserabweisendes oder imprägnierendes Mittel, ein Carboxylsäuresalz, ein Kunstharz, einen Verzögerungshilfsstoff, einen Beschleunigungshilfsstoff, einen Luft mitführenden Hilfsstoff, ein Entschäumungsmittel oder ein Rheologiemodifikationsmittel.

13. Verfahren zum Zubereiten einer Zusammensetzung nach einem der Ansprüche 1 bis 12, wobei ein Gemisch zubereitet wird, das wenigstens ein Öl der Formel (I), wenigstens ein Bindemittel und möglicherweise wenigstens ein granuläres Material und/oder wenigstens einen Zusatzstoff umfasst.

14. Verfahren zum Zubereiten einer Zusammensetzung nach Anspruch 13, wobei:
(i) ein Gemisch, das wenigstens ein Bindemittel und möglicherweise wenigstens ein granuläres Material und/oder wenigstens einen Zusatzstoff umfasst, zubereitet wird,
(ii) dem in (i) erlangten Gemisch wenigstens ein Öl der Formel (I) zugesetzt wird.

15. Verfahren zum Zubereiten einer Zusammensetzung nach Anspruch 13, wobei:
(i) ein Gemisch, das wenigstens ein Öl der Formel (I), wenigstens ein Bindemittel und möglicherweise wenigstens ein granuläres Material und/oder wenigstens einen Zusatzstoff umfasst, zubereitet wird;
(ii) ein Gemisch, das wenigstens ein Bindemittel und/oder wenigstens ein granuläres Material und/oder wenigstens einen Zusatzstoff umfasst, zubereitet wird,
(iii) das in (i) erlangte Gemisch dem in (ii) erlangten Gemisch zugesetzt wird.

16. Verwendung einer Zusammensetzung nach einem der Ansprüche 1 bis 12 zum Zubereiten einer Zementmilch, eines Mörtels, eines Betons, eines Putzmörtels, eines Kalkbewurfs und/oder eines Estrichs.

17. Verwendung einer Zusammensetzung nach Anspruch 16 zum Konstruieren, Bauen, Reparieren von Betons, Schützen von Betons und Stählen vor schlechten Wetterbedingungen, externen Beanspruchungen oder Feuer, Imprägnieren, Verankern, Verkeilen, Abdichten, Verbinden von Platten oder Bodenbelag und Fassadenabdeckungen.

## Claims

1. Dry composition comprising at least one binder and at least one silicone oil with the following formula (I): 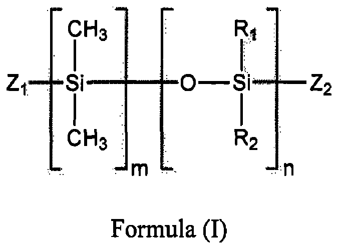 in which:
- Z₁ and Z₂, identical or different, independently represent a terminal group chosen from the group comprising a hydrogen atom, a hydroxyl, a C₁ to C₁₂ alkyl, linear or branched, optionally substituted, a C₂ to C₁₂ alkenyl radical, linear or branched, optionally substituted, a C₁ to C₁₂ heteroalkyl, linear or branched, optionally substituted, a C₅ to C₁₀ cycloalkyl radical, optionally substituted, and a C₆ to C₁₈ aryl radical, optionally substituted;
- R₁ and R₂, identical or different, independently represent a hydroxyl, a C₁ to C₁₂ alkyl, linear or branched, optionally substituted, a C₂ to C₁₂ alkenyl radical, linear or branched, optionally substituted, a C₁ to C₁₂ heteroalkyl, linear or branched, optionally substituted, a C₅ to C₁₀ cycloalkyl radical, optionally substituted, and a C₆ to C₁₈ aryl radical, optionally substituted;
- m and n, identical or different, independently represent a number ranging from 1 to 100.

2. Composition according to claim 1, which composition is in the form of a powder.

3. Composition according to claim 1 or 2, in which the oil has a surface tension of below 60 mN/m.

4. Composition according to any one of claims 1 to 3, in which the silicone oil has a dynamic viscosity of less than 0.1 Pa.s at 20°C.

5. Composition according to any one of claims 1 to 4, in which the silicone oil content is 0.05 to 5% by weight of the composition.

6. Composition according to any one of claims 1 to 5, in which the binder is chosen from the group comprising cement, lime, plaster, clay, synthetic polymers, or a mixture of same.

7. Composition according to any one of claims 1 to 5, in which the binder is chosen from the group comprising cement, lime, synthetic polymers, or a mixture of same.

8. Composition according to any one of claims 1 to 7, in which the binder content is 5 to 95% by weight of the composition.

9. Composition according to any one of claims 1 to 8, which also includes at least one granular material chosen from the group comprising sand, stone dust, ground brick, gravel, grits, alumina, bauxite, calcined bauxite, crushed flint, or any natural or synthetic granular material.

10. Composition according to claim 9, in which the granular material content is 5 to 95% by weight of the composition.

11. Composition according to claim 9 or 10, in which the granular material is siliceous, limestone, silico-limestone, aluminous or silico-aluminous granular material.

12. Composition according to any one of claims 1 to 11, also comprising an additive chosen from the group comprising fly ash, a water repellent or waterproofing agent, a carboxylic acid salt, a resin, a retarding adjuvant, an accelerating adjuvant, an air-entraining adjuvant, a defoaming agent or a rheology modifying agent.

13. Process for preparing a composition according to any one of claims 1 to 12 in which a mixture is prepared comprising at least one oil of formula (I), at least a binder and possibly at least one granular material and/or at least one additive.

14. Process for preparing a composition according to claim 13 in which:
(i) a mixture comprising at least one binder and possibly at least one granular material and/or at least one additive is prepared,
(ii) to the mixture obtained in (i), at least one oil of formula (I) is added.

15. Process for preparing a composition according to claim 13 in which:
(i) a mixture comprising at least one oil of formula (I) and at least one binder and possibly at least one granular material and/or at least one additive is prepared;
(ii) a mixture comprising at least one binder and/or at least one granular material and/or at least one additive is prepared;
(iii) the mixture obtained in (i) is added to the mixture obtained in (ii).

16. Use of a composition according to any one of claims 1 to 12 to prepare a grout, a mortar, a concrete, a plaster, a parget and/or a screed.

17. Use of a composition according to claim 16 for the construction, building, repair of concretes, protection of concretes and steels from adverse weather conditions, external stress or fire, waterproofing, anchoring, chocking, sealing, bonding of tiles or flooring, and façade coverings.
